# FASCICULE DE BREVET EUROPEEN

(11) **EP 2 636 086 B1**
(45) Date de publication et mention de la délivrance du brevet: **11.03.2015**
(21) Numéro de dépôt: 11787698.7
(22) Date de dépôt: 28.10.2011
(51) Int. Cl.: H01M 2/02, H01M 4/62, H01M 10/0525, H01M 10/0564

(54) **ACCUMULATEUR AU LITHIUM COMPORTANT UN ÉLECTROLYTE LIQUIDE IONIQUE**
LITHIUMBATTERIE MIT IONISCHEM FLÜSSIGELEKTROLYT
LITHIUM BATTERY COMPRISING AN IONIC LIQUID ELECTROLYTE

(30) Priorité: 02.11.2010 FR 1004293
(43) Date de publication de la demande: 11.09.2013
(73) Titulaire: Commissariat à l'Énergie Atomique et aux Énergies Alternatives, 75015 Paris (FR)
(72) Inventeur: GIROUD, Nelly, F-42100 Saint Etienne (FR); MOURZAGH, Djamel, F-38360 Sassenage (FR); ROUAULT, Hélène, F-38420 Le Versoud (FR); SOLAN Sébastien,, F-38170 Seyssinet-Pariset (FR)
(74) Mandataire: Talbot, Alexandre
(86) Numéro de dépôt international: PCT/FR2011/000581
(87) Numéro de publication internationale: WO 2012/059654

(56) Documents cités:
- WO-A1-2010/023185
- JP-A- 2006 147 268
- JP-A- 2009 140 918
- US-A1- 2010 266 902
- US-B1- 6 461 757

## Description

### Domaine technique de l'invention

L'invention concerne un accumulateur au lithium comportant au moins une cellule électrochimique disposée dans un emballage étanche et formée par un empilement comportant un séparateur agencé entre des première et seconde électrodes, ledit séparateur étant imprégné par un électrolyte liquide ionique comprenant un mélange d'un sel de lithium, de carbonate de vinyléthylène et d'un liquide ionique de formule C⁺A⁻ dans laquelle C⁺ représente un cation et A⁻ représente un anion et, ladite première électrode comportant un matériau électrochimiquement actif et un liant à base d'un polymère.

### État de la technique

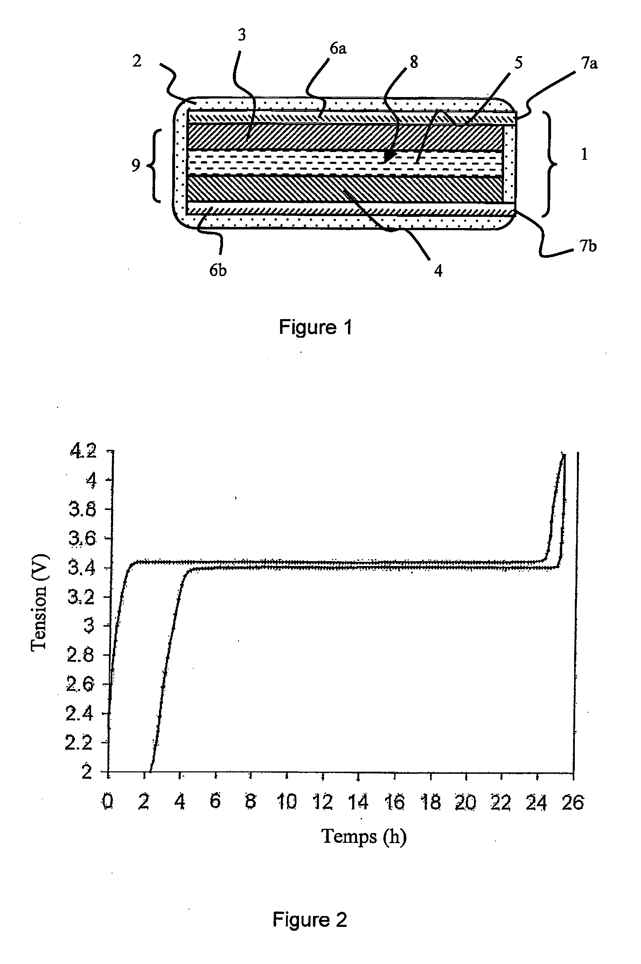

Comme représenté à la figure 1, les accumulateurs au lithium sont classiquement constitués par une cellule électrochimique 1 ou un empilement de cellules électrochimiques 1 dans un emballage 2. Chaque cellule électrochimique 1 est formée par une électrode positive 3 et une électrode négative 4 séparées par un électrolyte 5, un premier collecteur de courant 6a connecté à l'électrode positive 3 et un second collecteur de courant 6b connecté à une électrode négative 4. Les premier et second collecteurs de courant, 6a et 6b, traversent l'emballage 2 et forment à leur extrémité (à droite à la figure 1), respectivement, les premier et second pôles, 7a et 7b, pour assurer le transport des électrons vers un circuit électrique extérieur (non représenté). L'électrolyte 5 peut être sous forme solide, liquide ou gel.

Les accumulateurs au lithium peuvent également comporter un séparateur 8 imprégné par l'électrolyte 5, liquide ou gel disposé entre les électrodes positive et négative, 3 et 4. Le séparateur 8 empêche tout court-circuit en évitant la mise en contact de l'électrode positive 3 avec l'électrode négative 4.

L'électrode positive 3 comporte un matériau électrochimiquement actif choisi classiquement parmi les matériaux d'insertion du cation lithium (Li⁺).

L'électrode négative 4 comporte un matériau électrochimiquement actif choisi le plus souvent parmi le lithium métal, le carbone graphite et les matériaux d'insertion du lithium Li⁺.

Lorsque chacune des électrodes positive et négative, 3 et 4, est constituée par un matériau d'insertion du lithium Li⁺, l'accumulateur au lithium est un accumulateur Lithium-ion.

Le premier collecteur de courant 6a connecté à l'électrode positive 3 est classiquement en aluminium et le second collecteur de courant 6b connecté à l'électrode négative 4 est en général en cuivre, en cuivre nickelé ou en aluminium.

L'emballage 2 est souple ou rigide selon l'application visée. Pour un accumulateur Lithium-ion fin et flexible, l'emballage 2 est, avantageusement, souple.

Les électrodes comportant un matériau d'insertion du lithium Li⁺ comme matériau électrochimiquement actif sont classiquement formées par enduction d'une encre, compression ou calandrage, puis découpage sous forme de pastilles d'électrodes avant leur montage dans un accumulateur au lithium, typiquement à format pile bouton.

L'encre est, classiquement, formée à partir du matériau d'insertion du lithium Li⁺, dispersée dans un solvant organique ou aqueux puis enduite sur le collecteur de courant, 6a ou 6b, correspondant.

L'étape d'enduction est classiquement suivie par le séchage de l'ensemble encre/collecteur 6a ou 6b, pour évacuer le solvant contenu dans l'encre.

L'épaisseur d'enduction définit le grammage de l'électrode. On entend par grammage la masse du matériau d'insertion du lithium Li⁺ par unité de surface. À partir de la capacité spécifique du matériau d'insertion du lithium Li⁺ constituant l'électrode positive 3 ou l'électrode négative 4 et du grammage obtenu, on peut calculer la capacité surfacique de l'électrode exprimée en mAh.cm⁻².

La composition de l'encre, notamment le pourcentage en matériau actif d'insertion du lithium Li⁺ change en fonction de l'application visée. Ainsi, on distingue les formulations d'électrode pour accumulateur au lithium dit "de puissance" et celles pour accumulateur au lithium dit "d'énergie".

Un liant peut également être ajouté à l'encre, pour assurer la tenue mécanique de l'électrode positive 3 ou l'électrode négative 4 et améliorer l'interface entre l'électrode, 3 ou 4, et le séparateur 8.

Les liants pour électrode d'accumulateur au lithium sont nombreux. Toutefois, les plus courants sont des polymères qui se classent en deux catégories ; les liants polymère solubles dans les solvants organiques tels que le polyvinylidène fluorure (PVDF) et ; les liants polymères solubles dans un solvant aqueux comme la carboxyméthyle cellulose, notée CMC, le caoutchouc nitrile (en anglais "nitrile butadiene rubber" (NBR), le caoutchouc styrène-butadiène (en anglais "styrene butadiene rubber", noté SBR) et l'acide polyacrylique (en anglais "Poly(acrylic acid)", noté PAA) .

Récemment, la demanderesse a proposé dans le document FR-A-2935547 un électrolyte liquide ionique amélioré susceptible d'être utilisé dans un accumulateur au lithium. L'électrolyte liquide ionique comporte un liquide ionique de formule C⁺A⁻ où C⁺ représente un cation et A⁻ un anion, un sel conducteur et du carbonate de vinyléthylène (en anglais "Vinyl Ethylene Carbonate", noté VEC). En particulier, des tests comparatifs en cyclage ont été réalisés à partir d'une cellule électrochimique, format pile bouton, montée dans un boîtier en inox étanche. Les résultats ont montré des performances de l'accumulateur selon l'invention supérieures aux accumulateurs classiques à électrolyte organique. En outre, il a été montré que l'électrolyte liquide ionique présente une stabilité thermique pouvant atteindre jusqu'à 450°C.

Le document D1 decrit un accumulateur comprenant un électrolyte liquide ionique et une électrode comportant un liant à base d'acide polyacrylique.

### Objet de l'invention

L'objet de l'invention a pour but un accumulateur au lithium contenant un électrolyte ionique liquide ayant des performances électrochimiques améliorées, en particulier, à haute température.

L'objet de l'invention a également pour but de perfectionner l'accumulateur au lithium divulgué par la demanderesse dans le document FR-A-2935547, notamment en matière de tenue et de fiabilité à haute température.

L'objet de l'invention a enfin pour but un accumulateur au lithium économiquement viable, facile à mettre en oeuvre et peu encombrant.

Selon l'invention, ce but est atteint par un accumulateur au lithium comportant au moins une cellule électrochimique disposée dans un emballage étanche et formée par un empilement comportant un séparateur agencé entre des première et seconde électrodes, ladite première électrode comportant un matériau électrochimiquement actif et un liant à base d'un polymère,
le polymère est choisi parmi l'acide polyacrylique (PAA) et les perfluoropolymères sulfonés.

Selon l'invention, ce but est encore atteint par le fait que le séparateur est imprégné par un électrolyte liquide ionique comprenant un mélange d'un sel de lithium, de carbonate de vinyléthylène (VEC) et d'un liquide ionique de formule C⁺A⁻ dans laquelle C⁺ représente un cation et A⁻ représente un anion.

Selon l'invention, ce but est atteint par le fait que le polymère est choisi parmi l'acide polyacrylique (PAA) et les perfluoropolymères sulfonés.

Selon l'invention, ce but est également atteint par le fait que l'emballage comporte un matériau choisi parmi les polyéthylènimines, noté PEI, et les poly(aryl éther cétones) (en anglais "polyethylarylKetone", noté PAEK).

Selon un mode de réalisation préférentiel, le liant est constitué par de l'acide polyacrylique (PAA).

Selon un autre mode de réalisation préférentiel, l'acide polyacrylique (PAA) a un poids moléculaire moyen supérieur ou égal à 1 100 000. g.mol⁻¹, de préférence, supérieur ou égal à 1 250 000 g.mol⁻¹ et strictement inférieur à 3 000 000 g.mol⁻¹ et, le pourcentage de matériau électrochimiquement actif par rapport au poids total de la première électrode est supérieur ou égal à 90% en poids et inférieur à 100%. Selon un développement de l'invention, l'emballage est constitué d'au moins une feuille en poly(aryl éther cétone) (en anglais "polyaryletherKetone", noté PAEK), de préférence, en poly(éther éther cétone) (en anglais "polyethyletherKetone", noté PEEK).

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente, schématiquement et en coupe, un accumulateur au lithium selon l'art antérieur.
- La figure 2 représente, une courbe de test en cyclage réalisé à une température de 150°C, d'une demi-pile correspondant à un accumulateur au lithium (électrode négative Li métal)/ (séparateur en fibres de verre imprégné d'électrolyte ionique liquide)/ (électrode positive LiFePO₄ avec liant PAA) selon un mode de réalisation particulier de l'invention.

### Description de modes particuliers de réalisation.

La figure 1 est relative à un accumulateur au lithium selon l'état de l'art : ils ont été commentés en préambule et ne seront donc pas plus détaillés par la suite. Par souci de clarté, les mêmes éléments de l'état de l'art et selon l'invention sont désignés par les mêmes références.

Selon un mode particulier de réalisation, un accumulateur au lithium comporte au moins une cellule électrochimique 1 disposée dans un emballage 2 étanche.

La cellule électrochimique 1 est formée par un empilement 9 comportant un séparateur 8 agencé entre des première et seconde électrodes, 3 et 4. La première électrode 3 peut être une électrode positive et la seconde électrode 4 peut être une électrode négative.

Un premier collecteur de courant 6a et un second collecteur de courant 6b sont disposés de part et d'autre de l'empilement 9 et connectés, respectivement, aux première et seconde électrodes, 3 et 4.

Le séparateur 8 peut être une membrane poreuse, de préférence, à base de fibres de verre. Le séparateur 8 peut être constitué par des fibres de verre non-tissées, noyées dans un polymère pour renforcer leur stabilité mécanique très faible. Le séparateur 8 est imprégné par un électrolyte 5 liquide ionique.

L'électrolyte 5 liquide ionique comprend un mélange d'un liquide ionique, d'au moins un sel de lithium et de carbonate de vinyléthylène (VEC).

On entend électrolyte liquide ionique, un électrolyte constitué majoritairement de liquide ionique, c'est-à-dire comprenant au moins 50% de liquide ionique, avantageusement au moins 80 % de liquide ionique, de préférence de l'ordre de 90%.

On peut définir les liquides ioniques comme des sels liquides comprenant un cation et un anion. Les liquides ioniques sont ainsi généralement composés d'un cation organique volumineux, leur donnant une charge positive, auquel est associé un anion inorganique qui leur donne une charge négative. Le liquide ionique joue le rôle de solvant.

Le liquide ionique répond à la formule C⁺A⁻ dans laquelle C⁺ représente un cation et A- représente un anion.

Le cation C⁺ du liquide ionique est, avantageusement, choisi parmi les cations organiques, de préférence, parmi le N, N-propyl-méthyl-pipéridinium bis (trifuorométhanesulfonyl) imidure (PP13TFSI) ; le 1-hexyl-3-méthylimidazolium bis (trifluorométhanesulfonyl) imidure (HMITFSI) ; le (1,2-diméthyl-3-n-butylimidazolium) bis (trifuorométhane sulfonyl) imidure (DMBIFSI), le (1-nbutyl-3-méthylimidazolium) bis (trifluorométhane-sulfonyl) imidure (BMITFSI) et leurs mélanges.

L'anion A⁻ du liquide ionique peut être choisi parmi les halogénures, de préférence, parmi BF₄⁻, TFSI(N(S₂CF₃)²⁻) et le TFSI⁻.

Le sel de lithium permet le déplacement du cation lithium de la première électrode 3 vers seconde électrode 4, et inversement.

Le sel de lithium est, avantageusement, l'hexafluorophosphate de lithium (LiPF₆), le tétrafluoroborate de lithium (LiBF₄), le bis (fluorosulfonyl) imidure de lithium (LiFSI) et le bis (trifluorométhylsulfonyl) imidure de lithium (LiTFSI) et leurs mélanges.

Le carbonate de vinyléthylène, noté VEC, est utilisé comme additif spécifique. Le VEC permet notamment d'obtenir une couche de passivation sur une électrode négative 4 en graphite comme décrit dans le document FR-A-2935547 dont le contenu est intégralement incorporé par référence dans la présente demande ou qui pourra servir de référence à l'homme de l'art.

L'électrolyte 5 liquide ionique comporte, avantageusement, de 0,1 mol/L à 10 mol/L de sel de lithium, de préférence, entre 1 mol/L et 2 mol/L de sel de lithium.

L'électrolyte 5 liquide ionique comporte, avantageusement, de 1% à 10%, de préférence de 2% à 5% en volume, de VEC par rapport au volume de liquide ionique.

À titre de premier exemple, l'électrolyte 5 liquide ionique comprend
1,6 mol/L de LiTFSI dans le solvant liquide ionique PP13TFSI et de 1% à 10% en volume de VEC, de préférence 5%.

À titre de second exemple, l'électrolyte 5 liquide ionique comprend
1,6 mol/L de LiTFSI dans le solvant liquide ionique HMITFSI et de 1% à 10% en volume de VEC, de préférence 5%.

À titre de troisième exemple, l'électrolyte 5 liquide ionique comprend 1,6mol/L de LiTFSI dans le solvant liquide ionique DMBITFSI et de 1% à 10% en volume de VEC, de préférence 5%.

À titre de quatrième exemple, l'électrolyte 5 liquide ionique comprend 1,6 mol/L de LiTFSI dans le solvant liquide ionique BMITFSI/ BF₄⁻ et de 1 % à 10% en volume de VEC, de préférence 5%.

La première électrode 3 comporte un matériau électrochimiquement actif et un liant à base d'un polymère.

Le matériau électrochimiquement actif est, avantageusement, un matériau d'insertion du lithium Li⁺. Le matériau d'insertion du lithium Li⁺ peut être choisi parmi les matériaux non lithiés comme, par exemple, les sulfures ou disulfures de cuivre (CuS ou CuS₂), les oxysulfures de tungstène (WO_{y}S_{z}), les disulfures de titane (TiS₂), les oxysulfures de titane (TiOₓS_{y}) ou les oxydes de vanadium (VₓO_{y}), les matériaux lithiés comme, par exemple, les oxydes mixtes à base de lithium tels que l'oxyde de lithium et de cobalt (LiCoO₂), l'oxyde de lithium et de nickel (LiNiO₂), l'oxyde de lithium et de manganèse (LiMn₂O₄), le pentoxyde de lithium et de vanadium (LiV₂O₅), le phosphate de lithium et de fer (LiFePO₄ ) ou l'oxyde de lithium, de manganèse et de nickel (LiNi_{0,5}Mn_{1,5}O₄).

Le matériau électrochimiquement actif est, de préférence, du LiFePO₄.

Le liant est à base d'un polymère choisi parmi l'acide polyacrylique (PAA) et les perfluoropolymères sulfonés. Le liant comprend ainsi un polymère choisi parmi l'acide polyacrylique (PAA) et les perfluoropolymères sulfonés.

Le terme "à base" doit être interprété au sens de "majoritairement" c'est-à-dire que le liant comporte plus de 50% du polymère, avantageusement, entre 90% et 100% en poids de polymère. Le liant est, de préférence, constitué par le polymère.

Lors de la formulation de l'encre, le polymère est généralement dissout dans un solvant, comme de l'eau, pour atteindre une viscosité propice à la mise en forme de l'électrode, dont les conditions de réalisation sont à la portée de l'homme du métier.

Parmi les perfluoropolymères sulfonés connus, on choisira préférentiellement, les ionomères de perfluorosulfonates de type NAFION® (marque déposée par Dupont De Nemours).

Selon un mode de réalisation préféré, le polymère est constitué par de l'acide polyacrylique (PAA). Une électrode comportant un tel liant PAA a déjà été décrite dans une demande de brevet français déposée le 29/07/2010 par la demanderesse sous le numéro de dépôt FR-A-1003193. Le contenu de cette demande FR-A-1003193 est incorporé par référence dans la présente demande ou pourra servir de référence à l'homme de l'art.

En particulier, l'acide polyacrylique (PAA) a, de préférence, un poids moléculaire moyen supérieur ou égal à 1 100 000 g.mol⁻¹, de préférence, supérieur ou égal à 1 250 000 g.mol⁻¹ et strictement inférieur à 3 000 000 g.mol⁻¹.

Le poids moléculaire moyen de l'acide polyacrylique (PAA) est, avantageusement, compris entre 1 250 000 g.mol⁻¹ et 2 000 000 g.mol⁻¹. Plus particulièrement, le poids moléculaire moyen de l'acide polyacrylique (PAA) est, de préférence, égal à 1 250 000 g.mol⁻¹.

Le pourcentage de matériau électrochimiquement actif par rapport au poids total de la première électrode 3 est, avantageusement, supérieur ou égal à 90% en poids et inférieur à 100% en poids.

La première électrode 3 comporte, de préférence, plus de 90% en poids du matériau électrochimiquement actif et 4% en poids d'acide polyacrylique (PAA) ou moins de 4% en poids d'acide polyacrylique (PAA), lesdits pourcentages étant calculés par rapport au poids total de l'électrode.

En particulier, la première électrode 3 comporte plus de 94% en poids du matériau électrochimiquement et moins de 3% en poids d'acide polyacrylique (PAA), lesdits pourcentages étant calculés par rapport au poids total de l'électrode.

En outre, la première électrode 3 peut comporter moins de 3% d'un conducteur électronique. Le conducteur électronique est classiquement ajouté au matériau d'insertion du lithium Li⁺, pour améliorer la conductivité électronique de l'électrode 3.

Le conducteur électronique peut, par exemple, être choisi parmi le noir de carbone, les fibres de carbone et un mélange de ceux-ci.

Le matériau électrochimiquement actif peut, par exemple, être constitué de particules de matériau électrochimiquement actif enrobées d'un matériau conducteur électrique, notamment, de carbone obtenu selon tout procédé connu.

La seconde électrode 4 est, avantageusement, constituée par un matériau choisi parmi le lithium et le carbone. En particulier, la seconde électrode 4 est constituée par du lithium métallique ou un feutre de carbone.

L'emballage 2 peut être souple ou rigide. L'emballage 2 permet de contenir la cellule électrochimique 1 et assure l'étanchéité de l'accumulateur au lithium. L'emballage 2 est traversé par une partie des collecteurs de courant 6a et 6b formant, respectivement, les premier et second pôles, 7a et 7b, qui s'étendent dans le plan de la cellule électrochimique 1.

L'emballage 2 peut-être fait d'un métal de type titane, aluminium ou inox. On préférera, néanmoins, un emballage 2 en polyéthylènimines (PEI) et/ou en poly(aryl éther cétones) (PAEKs) c'est-à-dire qui comporte un matériau choisi parmi les PEI et les PAEKs.

En particulier, l'emballage 2 peut être constitué exclusivement de polymère de type PAEK.

L'emballage 2 peut, avantageusement, être constitué d'au moins une feuille en poly(aryl éther cétone) (PAEK). Une telle feuille en PAEK pour emballage d'accumulateur au lithium a déjà été décrite par la demanderesse dans la demande de brevet français déposée le 02/02/2010 sous le numéro de dépôt FR-A-1050726. Le contenu de cette demande FR-A-1050726 est incorporé par référence dans la présente demande ou pourra servir de référence à l'homme de l'art.

La famille de polymères PAEK qui convient dans le cadre de l'invention comprend les polymères suivants:
- poly(éther cétone) (PEK),
- poly(éther éther cétone) (PEEK™),
- poly(éther cétone cétone) (PEKK),
- poly(éther éther cétone cétone) (PEEKK),
- poly(éther cétone éther cétone cétone) (PEKEKK).

L'emballage 2 peut être constitué d'une seule feuille en PAEK repliée sur elle-même en deux parties solidarisées entre elles sur leur périphérie.

Alternativement, l'emballage 2 peut être constitué d'une pluralité de feuilles en PAEK solidarisées entre elles sur leur périphérie.

Les deux parties d'une feuille en PAEK repliée sur elle-même ou deux feuilles en PAEK indépendantes peuvent être solidarisées entre elles selon tout procédé connu, en particulier, par auto collage, soudure, ultrasons, laser ou par thermo scellage.

Selon un mode de réalisation particulier non représenté, l'emballage 2 comporte au moins une feuille en PAEK intégrant dans son épaisseur au moins un plot métallique constituant un des pôles, 7a ou 7b, de l'accumulateur au lithium. Contrairement au mode de réalisation particulier décrit ci-dessus, les premier et second collecteurs, 6a ou 6b, ne traversent pas l'emballage 2. Le plot métallique est soudé à la partie d'un collecteur de courant, 6a ou 6b, contenue à l'intérieur de l'emballage 2.

À titre d'exemple, un plot métallique en aluminium soudé à la partie interne du premier collecteur de courant 6a en aluminium peut former le premier pôle 7a. Un plot métallique en cuivre soudé à la partie interne du second collecteur de courant 6b en cuivre peut former le second pôle 7b.

Selon une variante de réalisation non représentée, l'emballage 2 est constitué d'une seule feuille en PAEK intégrant dans son épaisseur deux plots métalliques constituant les premier et second pôles, 7a et 7b, de l'accumulateur au lithium. La feuille en PAEK est repliée sur elle-même en deux parties solidarisées entre elles sur leur périphérie, chacun des deux plots étant soudé à la partie d'un collecteur de courant 6a ou 6b contenue à l'intérieur de l'emballage 2.

Selon une autre variante non représentée, l'emballage 2 est constitué d'une feuille en PAEK intégrant dans son épaisseur deux plots métalliques constituant les premier et second pôles, 7a et 7b, de l'accumulateur au lithium et d'une feuille en PAEK dépourvue de plots métalliques et solidarisée à sa périphérie à la feuille en PAEK intégrant les deux plots métalliques. Chacun des deux plots est soudé à la partie d'un collecteur de courant 6a ou 6b contenue à l'intérieur de l'emballage 2.

Selon une autre variante non représentée, l'emballage 2 est constitué de deux feuilles en PAEK intégrant chacune dans son épaisseur un plot métallique constituant l'un des premier et second pôles, 7a et 7b, de l'accumulateur au lithium. Chaque plot est soudé à la partie d'un collecteur de courant 6a ou 6b contenue à l'intérieur de l'emballage 2.

Selon un mode de réalisation préféré, le poly(aryl éther cétone) est, avantageusement, le poly(éther éther cétone) (PEEK™).

Une seule feuille souple en PEEK™ peut suffire pour réaliser l'emballage 2 de l'accumulateur au lithium. Les feuilles en PEEK™ actuellement commercialisées d'épaisseur unitaire de 12µm, 30 µm, 70 µm conviennent dans le cadre de l'invention. On peut réaliser une solidarisation de plusieurs feuilles de ces gammes d'épaisseur entre-elles afin d'augmenter la résistance mécanique de l'emballage 2.

Lorsque l'emballage 2 est constitué de deux feuilles en PAEK, on peut avantageusement choisir leur épaisseur unitaire telle qu'elles sont rigides, l'une des feuilles étant usinée pour constituer un fond de l'emballage 2, pour contenir la cellule électrochimique 1 et l'autre des feuilles intégrant les plots métalliques constituant le couvercle de l'emballage 2.

L'emballage 2 est, avantageusement, réalisé selon un procédé identique à celui décrit dans ladite demande FR-A-10580726 de la demanderesse.

Les performances électrochimiques d'un accumulateur au lithium selon l'invention ont été mesurées dans une demi-pile au lithium métallique.

La demi-pile est montée avec une première électrode 3 en LiFePO₄/PAA, un séparateur 8 en fibres de verre imprégné par l'électrolyte 5 et une seconde électrode 4 en lithium métallique.

Le PAA utilisé a un poids moléculaire de 1 250 000g.mol⁻¹ et le rapport des pourcentages en poids %LiFePO₄/ %PAA est de 90/10.

Le séparateur 8 en fibres de verre est commercialisé par la société Bernard Dumas sous lé référence AW1 F1755.

L'électrolyte 5 a été réalisé selon le second exemple décrit précédemment. L'électrolyte 5 est formé par mélange de 5% en volume de VEC avec 95% en volume d'un liquide ionique constitué par une solution de sel de LiTFSI dans du HMITFSI à une concentration de 1,6 mol/L.

La demi-pile ainsi formée est soumise à un test en cyclage à régime C/20 à une température de 150°C.

Comme représenté à la figure 2, après cinq cycles, la capacité restituée s'élève à 159,6mAh.g⁻¹.

Les propriétés d'adhérence de la première électrode 3 sur le premier collecteur de courant 6a sont améliorées. En outre, contrairement à l'art antérieur, aucun phénomène de décollement, ni de gonflement, ni d'explosion ne survient à haute température. Aucune dégradation des performances électrochimiques de l'accumulateur au lithium n'est observée à haute température.

La demanderesse a ainsi constaté, de façon surprenante, que l'ajout d'acide polyacrylique (PAA) ou d'un perfluoropolymère sulfoné améliore notablement les performances électrochimiques et la tenue thermique de l'accumulateur au lithium.

En particulier, comparativement à l'art antérieur, l'utilisation de PAA comme liant du matériau électrochimiquement actif de la première électrode, plus particulièrement, dans les proportions et la gamme de poids moléculaires décrites ci-dessus, confère à la première électrode des propriétés mécaniques améliorées, une meilleure adhérence au premier collecteur de courant 6a et une tenue en température remarquable sans affecter les performances électrochimiques de la première électrode.

En outre, le choix du poids moléculaire moyen du PAA de l'électrode a un effet sensible sur la tenue thermique et mécanique à haute température de la première électrode 3.

L'accumulateur au lithium selon l'invention est remarquable en ce qu'il présente une tenue à haute température améliorée et évite toute fuite et risque d'explosion à haute température. Par ailleurs, les accumulateurs au lithium selon l'invention sont simples à mettre en oeuvre, peu encombrant et peu coûteux. Des accumulateurs au lithium de puissance ou d'énergie peuvent aisément être réalisés, dans le cadre de l'invention, pour une large gamme d'applications.

## Revendications

1. Accumulateur au lithium comportant au moins une cellule électrochimique (1) disposée dans un emballage (2) étanche et formée par un empilement (9) comportant un séparateur (8) agencé entre des première et seconde électrodes (3, 4), ledit séparateur (8) étant imprégné par un électrolyte (5) liquide ionique comprenant un mélange d'un sel de lithium, de carbonate de vinyléthylène et d'un liquide ionique de formule C⁺A⁻ dans laquelle C⁺ représente un cation et A⁻ représente un anion et, ladite première électrode (3) comportant un matériau électrochimiquement actif et un liant à base d'un polymère,
**caractérisé en ce que** le polymère est de l'acide polyacrylique (PAA), le poids moléculaire moyen de l'acide polyacrylique (PAA) étant compris entre 1 250 000 g.mol⁻¹ et 2 000 000 g.mol⁻¹.

2. Accumulateur selon la revendication 1, **caractérisé en ce que** le pourcentage de matériau électrochimiquement actif par rapport au poids total de la première électrode (3) est supérieur ou égal à 90% en poids et inférieur à 100%.

3. Accumulateur selon l'une des revendications 1 et 2 **caractérisé en ce que** le poids moléculaire moyen de l'acide polyacrylique (PAA) est égal à 1 250 000g.mol⁻¹.

4. Accumulateur selon l'une quelconque des revendications 1 à 3, **caractérisé en ce que** le matériau électrochimiquement actif est un matériau d'intercalation du lithium Li⁺.

5. Accumulateur selon l'une quelconque des revendications 1 à 4, **caractérisé en ce que** la première électrode (3) comporte plus de 90% en poids du matériau électrochimiquement et 4% en poids d'acide polyacrylique (PAA) ou moins de 4% en poids d'acide polyacrylique (PAA), lesdits pourcentages étant calculés par rapport au poids total de l'électrode (3).

6. Accumulateur selon la revendication 5, **caractérisé en ce que** la première électrode (3) comporte plus de 94% en poids du matériau électrochimiquement et moins de 3% en poids d'acide polyacrylique (PAA), lesdits pourcentages étant calculés par rapport au poids total de l'électrode (3).

7. Accumulateur selon l'une des revendications 5 et 6, **caractérisé en ce que** la première électrode (3) comporte moins de 3% d'un conducteur électronique.

8. Accumulateur selon l'une quelconque des revendications 1 à 7, **caractérisé en ce que** le séparateur (8) est une membrane poreuse à base de fibres de verre.

9. Accumulateur selon l'une quelconque des revendications 1 à 8, **caractérisé en ce que** la seconde électrode (4) est constituée par un matériau choisi parmi le lithium et le carbone.

10. Accumulateur selon l'une quelconque des revendications 1 à 9, **caractérisé en ce que** l'emballage (2) comporte un matériau choisi parmi les polyéthylènimines (PEI) et les poly(aryl éther cétones) (PAEKs).

11. Accumulateur selon la revendication 10, **caractérisé en ce que** l'emballage (2) est constitué d'au moins une feuille en poly(aryl éther cétone) (PAEK).

12. Accumulateur selon la revendications 11, **caractérisé en ce que** le poly(aryl éther cétone) est le poly(éther éther cétone) (PEEK).

## Patentansprüche

1. Lithium-Akkumulator, umfassend wenigstens eine elektrochemische Zelle (1), die in einer dichten Verpackung (2) angeordnet ist und durch eine Aufschichtung (9), welche einen zwischen einer ersten und einer zweiten Elektrode (3, 4) angeordneten Separator (8) umfasst, gebildet ist, wobei der Separator (8) mit einem flüssigen ionischen Elektrolyt (5) imprägniert ist, der eine Mischung aus einem Lithiumsalz, aus Vinylethylencarbonat und aus einer ionischen Flüssigkeit der Formel C⁺A⁻, worin C⁺ ein Kation und A⁻ ein Anion darstellt, umfasst, und wobei die erste Elektrode (3) ein elektrochemisch aktives Material und ein Bindemittel auf der Basis eines Polymeres umfasst,
dadurch gekenntzeichnet, dass das Polymer Polyacrylsäure (PAA) ist, wobei das mittlere Molgewicht der Polyacrylsäure (PAA) im Bereich zwischen 1250 000 g.mol⁻¹ und 2 000 000 g.mol⁻¹ liegt.

2. Akkumulator nach Anspruch 1, **dadurch gekennzeichnet, dass** der Prozentsatz des elektrochemisch aktiven Materials bezogen auf das Gesamtgewicht der ersten Elektrode (3) größer als oder gleich 90 Gew.-% und kleiner als 100 % ist

3. Akkumulator nach einem der Ansprüche 1 und 2, **dadurch gekennzeichnet, dass** das mittlere Molgewicht der Polyacrylsäure (PAA) gleich 1250 000 g.mol⁻¹ ist.

4. Akkumulator nach einem der Ansprüche 1 bis 3, **dadurch gekennzeichnet, dass** das elektrochemisch aktive Material ein Material zur Einlagerung von Lithium Li⁺ ist.

5. Akkumulator nach einem der Ansprüche 1 bis 4, dadurch gekenntzeichnet, dass die erste Elektrode (3) mehr als 90 Gew.-% des elektrochemisch Materials sowie 4 Ges.-% Polyacrylsäure (PAA) oder weniger als 4 Gew.-% Polyacrylsäure (PAA) umfasst, wobei die Prozentsätze in Bezug auf das Gesamtgewicht der Elektrode (3) berechnet sind.

6. Akkumulator nach Anspruch 5, **dadurch gekennzeichnet, dass** die erste Elektrode (3) mehr als 94 Gew.-% des elektrochemisch Materials sowie weiniger als 3 Gew.-% Polyacrylsäure (PAA) umfasst, wobei die Prozentsätze in Bezug auf das Gesamtgewicht der Elektrode (3) berechnet sind.

7. Akkumulator nach einem der Ansprüche 5 und 6, **dadurch gekennzeichnet, dass** die erste Elektrode (3) weniger als 3 % eines elektronischen Leiters umfasst.

8. Akkumulator nach einem der Anspruche 1 bis 7, **dadurch gekennzeichnet, dass** der Separator (8) eine poröse Membran auf Glasfaserbasis ist.

9. Akkumulator nach einem der Ansprüche 1 bis 8, **dadurch gekennzeichnet, dass** die zweite Elektrode (4) durch ein Material, das aus Lithium und Kohlenstoff ausgewählt ist, gebildet ist.

10. Akkumulator nach einem der Ansprüche 1 bis 9, **dadurch gekennzeichnet, dass** die Verbackung (2) ein Material, das aus den Polyethyleniminen (PEI) und den Polyaryletherketonen (PAEK) ausgewählt ist, umfasst.

11. Akkumulator nach Anspruch 10, **dadurch gekennzeichnet, dass** die Verbackung (2) von wenigstens einer Folie aus Polyaryletherketon (PAEK) gebildet ist.

12. Akkumulator nach Anspruch 11, **dadurch gekennzeichnet, dass** das Polyaryletherketon Polyetheretherketon (PEEK) ist.

## Claims

1. A lithium storage battery comprising at least one electrochemical cell (1) arranged in a tightly sealed packaging (2) and formed by a stack (9) comprising a separator (8) arranged between first and second electrodes (3, 4), said separator (8) being impregnated by an ionic liquid electrolyte (5) comprising a mixture of a lithium salt, vinyl ethylene carbonate and an ionic liquid of formula C⁺A⁻ in which C⁺ represents a cation and A⁻ represents an anion, and said first electrode (3) comprising an electrochemically active material and a polymer-based binder, **characterized in that** the polymer is polyacrylic acid (PAA), the mean molecular weight of polyacrylic acid (PAA) being comprised between 1,250,000 g.mol⁻¹ and 2,000,000 g.mol⁻¹.

2. The storage battery according to claim 1, **characterized in that** the percentage of electrochemically active material with respect to the total weight of the first electrode (3) is greater than or equal to 90% by weight and less than 100%.

3. The storage battery according to one of claims 1 and 2, **characterized in that** mean molecular weight of polyacrylic acid (PAA) is equal to 1,250,000g.mol⁻¹.

4. The storage battery according to any one of claims 1 to 3, **characterized in that** the electrochemically active material is a Lithium Li⁺ insertion material.

5. The storage battery according to any one of claims 1 to 4, **characterized in that** the first electrode (3) comprises more than 90% by weight of the electrochemically material and 4% by weight of polyacrylic acid (PAA) or less than 4% by weight of polyacrylic acid (PAA), said percentages being calculated with respect to the total weight of the electrode (3).

6. The storage battery according to claim 5, **characterized in that** the first electrode (3) comprises more than 94% by weight of the electrochemically material and less than 3% by weight of polyacrylic acid (PAA), said percentages being calculated with respect to the total weight of the electrode (3).

7. The storage battery according to one of claims 5 and 6, **characterized in that** the first electrode (3) comprises less than 3% of an electronic conductor.

8. The storage battery according to any one of claims 1 to 7, **characterized in that** the separator (8) is a glass fibre-based porous membrane.

9. The storage battery according to any one of claims 1 to 8, **characterized in that** the second electrode (4) is formed by a material chosen from lithium and carbon.

10. The storage battery according to any one of claims 1 to 9, **characterized in that** the packaging (2) comprises a material chosen from polyethylenimines (PEI) and polyaryletherketones (PAEKs).

11. The storage battery according to claim 10, **characterized in that** the packaging (2) is formed by at least one sheet of polyaryletherketone (PAEK).

12. The storage battery according to claim 11, **characterized in that** the polyaryletherketone is polyetheretherketone (PEEK).
